Europäisches Patentamt

European Patent Office

Office européen des brevets

(19)

(11) Veröffentlichungsnummer: **0 263 559**
**B1**

(12) **EUROPÄISCHE PATENTSCHRIFT**

(45) Veröffentlichungstag der Patentschrift:
07.02.90

(21) Anmeldenummer: 87201889.0

(22) Anmeldetag: 03.10.87

(51) Int. Cl.⁴: **C22B 7/04**, C21B 3/06,
C01D 7/00

(54) Verfahren zur Aufarbeitung von Sodaschlacken aus der Entschwefelung von Roheisen.

(30) Priorität: 08.10.86 DE 3634227

(43) Veröffentlichungstag der Anmeldung:
13.04.88 Patentblatt 88/15

(45) Bekanntmachung des Hinweises auf die Patenterteilung:
07.02.90 Patentblatt 90/6

(84) Benannte Vertragsstaaten:
DE

(56) Entgegenhaltungen:
DE-A- 1 934 308
DE-C- 900 088
FR-A- 2 415 612
FR-A- 2 541 309

(73) Patentinhaber: METALLGESELLSCHAFT AG,
Reuterweg 14 Postfach 3724, D-6000 Frankfurt/M.1(DE)
Patentinhaber: Stahlwerke Peine-Salzgitter AG,
Eisenhüttenstrasse 99 Postfach 41 11 80,
D-3320 Salzgitter 41(DE)

(72) Erfinder: Minzl, Erich, Dr., Berliner Strasse 22,
D-8755 Alzenau(DE)
Erfinder: Fennemann, Wolfgang, Schlinkenweg 16,
D-6367 Karben 6(DE)
Erfinder: Köbele, Klaus, Tannenstrasse 8,
D-6051 Dietzenbach(DE)
Erfinder: Enss. Jürgen, Dr., Wilhelm Rabe Strasse 34,
D-3340 Wolfenbüttel(DE)

(74) Vertreter: Rieger, Harald, Dr., Reuterweg 14,
D-6000 Frankfurt a.M.(DE)

**Beschreibung**

Die Erfindung betrifft ein Verfahren zur Aufarbeitung von beim Entschwefeln von Roheisenschmelzen mit Natriumkarbonat anfallenden Schlacken.

Roheisenschmelzen werden zur Entfernung von Schwefel durch Zugabe von Natriumkarbonat als Schlackenbildner behandelt. Diese Sodaschlacken stellen ein Deponieproblem dar und enthalten eine große Menge an Natrium, das zum Entschwefeln benötigt wird.

Die Sodaschlacken werden deshalb zur Wiedergewinnung ihres Natriumgehaltes und zur Verringerung der Deponieprobleme aufgearbeitet. Dabei wird der Natriumgehalt in Form von Natriumkarbonat wiedergewonnen und erneut zum Entschwefeln zugesetzt. Das Natriumkarbonat darf jedoch nur wenig Schwefel und Silizium enthalten.

Aus der DE-AS 26 56 812 ist eine Aufarbeitung einer Sodaschlacke von der Entphosphorung und Entschwefelung von Roheisen bekannt, bei der die zerkleinerte Schlacke unter Einleitung von $CO_2$ in Wasser gelaugt wird, wobei ein pH-Wert der Lösung von 9 bis 12 eingestellt wird. Nach einer Fällung des Phosphors mit $Ca(OH_2)$ und Abfiltrierung wird die Lösung auf etwa die Hälfte eingedampft, auf 30°C abgekühlt und Natriumkarbonat oder Natriumbikarbonat unter Einleitung von $CO_2$ ausgefällt. Nach Filtrierung wird die Mutterlauge in die Laugung zurückgeleitet. In einem Teilstrom wird mittels Tauchbrenner Schwefel entfernt.

Aus der US-PS 4 225 565 ist es ebenfalls bekannt, die Schlacke mit heißem Wasser unter Zugabe von $CO_2$ bei einem pH-Wert von 9 bis 11,5 zu laugen. Nach einer Fällung von Schwefel und Phosphor durch Zugabe von Eisensulfat oder $Ca(OH)_2$ und Abfiltrierung wird durch Eindampfen und Kristallisation Natriumkarbonat gewonnen. Die Mutterlauge wird in die Laugung zurückgeführt.

Die Rückführung der Mutterlauge in die Laugungsstufe ergibt durch den hohen Natriumgehalt eine Verschlechterung der Natrium-Löslichkeit.

Der Erfindung liegt die Aufgabe zugrunde, eine Aufbereitung der Schlacke mit möglichst hoher Natrium-Rückgewinnung zu ermöglichen, wobei nur gut deponierbare, feste Rückstände anfallen, kein Abwasser anfällt und ein sehr reines Natriumkarbonat erzeugt wird.

Die Lösung dieser Aufgabe erfolgt erfindungsgemäß dadurch, daß

a) die zerkleinerte Schlacke mit Waschflüssigkeit in einer ersten Laugungsstufe bei einer Temperatur von 55 bis 75°C, vorzugsweise 60 bis 70°C, und einem pH-Wert von 9,5 bis 12, vorzugsweise 9,5 bis 10,5, unter Rühren gelaugt wird, wobei der pH-Wert so hoch eingestellt wird, daß mindestens ein Teil des $SiO_2$-Gehaltes d    er Schlacke aufgelöst wird,

b) die Suspension aus der ersten Laugungsstufe in einer zweiten Laugungsstufe bei einer Temperatur von 55 bis 70°C, vorzugsweise 60 bis 70°C, unter Rühren und $CO_2$-Einleitung auf einen niedrigeren pH-Wert als in (a) von 9 bis 10, vorzugsweise 9 bis 9,5, eingestellt wird, und die Verweilzeit in der Laugungsstufe so eingestellt wird, daß das $SiO_2$ weitgehend ausfällt,

c) das Verhältnis von Waschflüssigkeit und Schlacke in (a) und (b) so eingestellt wird, daß eine Na-Konzentration von mindestens 100 g/l in der Laugeflüssigkeit erreicht wird, jedoch die Sättigungskonzentration nicht erreicht wird,

d) die Suspension aus (b) durch Filtrieren in Rückstand und Filtrat getrennt wird,

e) der Rückstand aus (d) mit Wasser gewaschen wird, wobei die Wassermenge so eingestellt wird, daß das Waschfiltrat maximal der in (a) erforderlichen Laugeflüssigkeit entspricht, und

f) aus dem Filtrat aus (d) Natriumkarbonat rückgewonnen wird.

Zur Vermeidung von unerwünschten Oxidationsreaktionen der Schlacken mit Feuchtigkeit wird vorzugsweise noch warme Schlacke von etwa 40 bis 80°C in die Schlackenbrechung und Schlackenaufmahlung eingesetzt. Das Vermahlen der Schlacken auf die Endfeinheit von etwa maximal 3 bis 5 mm und die Zwischenlagerung der aufgemahlenen Schlacke erfolgen zur Vermeidung von unerwünschten Oxidationsreaktionen, vorzugsweise unter Inertgasatmosphäre.

Der pH-Wert in der ersten Laugungsstufe wird so eingestellt, daß dort mindestens 10 % des in der Schlacke vorhandenen $SiO_2$ in Lösung gehen. Der erforderliche pH-Wert kann durch entsprechende Wahl des Verhältnisses von Schlacke zu Laugungsflüssigkeit oder, wenn dies nicht möglich ist, durch Zugabe von $CO_2$ in die erste Laugungsstufe eingestellt werden. In der zweiten Laugungsstufe wird der pH-Wert so weit gesenkt und die Verweilzeit so lange gewählt, daß das in der ersten Stufe in Lösung gegangene $SiO_2$ weitgehend wieder ausfällt. Durch diese zweistufige Laugung mit unterschiedlichen pH-Werten wird einerseits eine sehr gute Auslaugung des Natrium-Gehaltes der Schlacke und andererseits der $SiO_2$-Gehalt im nachfolgenden Filtrat gering gehalten. Wenn die Menge an Waschflüssigkeit für die Laugung zu gering ist, wird Ergänzungswasser zugegeben. Die Verwendung von Waschflüssigkeit mit relativ geringem Gehalt an Natrium von etwa 20 bis 40 g/l hat den Vorteil, daß eine gute Auslaugung des Natriumgehaltes der Schlacke erfolgt und trotzdem Laugeflüssigkeiten mit einem Natriumgehalt nahe an der Sättigungsgrenze anfallen. Außerdem kann beim Waschen des Rückstandes relativ viel Wasser verwendet werden, da das Waschwasser in den Prozeß zurückgeführt wird, wodurch wiederum der Natriumgehalt des Rückstandes sehr geringgehalten werden kann, ohne daß dabei Abwässer anfallen.

Eine vorzugsweise Ausgestaltung besteht darin, daß zur Einstellung des pH-Wertes in der ersten

Laugungsstufe (a) $CO_2$ eingeleitet wird. Dadurch kann der gewünschte pH-Wert in der ersten Laugungsstufe auch bei Schwankungen in der Schlackenzusammensetzung sehr genau eingehalten und schnell korrigiert werden.

Eine vorzugsweise Ausgestaltung besteht darin, daß die zweite Laugungsstufe (c) zweistufig hintereinandergeschaltet durchgeführt wird. Dadurch kann die notwendige Verweilzeit mit kleinen Aggregaten erzielt werden, und es erfolgt eine Verbesserung der $SiO_2$-Ausfällung.

Eine vorzugsweise Ausgestaltung besteht darin, daß das Waschen des Rückstandes gemäß (e) mehrstufig durchgeführt wird. Das Waschen erfolgt dabei vorzugsweise im Gegenstrom zwischen Waschwasser und Rückstand. Dadurch wird ein besonders gutes Auswaschen des Natrium-Gehaltes des Rückstandes erzielt.

Eine vorzugsweise Ausgestaltung besteht darin, daß zur Rückgewinnung des Natriumkarbonats aus dem Filtrat gemäß (f) das Filtrat bis zur Sättigungsgrenze eingedampft wird, eine Karbonat-Kristallisation durchgeführt wird, das Kristallisat aus der Mutterlauge abgetrennt, gewaschen und getrocknet wird, die überwiegende Menge der Mutterlauge und des Waschwassers in die Eindampfung zurückgeleitet wird, der restliche Teilstrom von Verunreinigungen befreit und dann in die Eindampfung oder Kristallisation zurückgeleitet wird, wobei die Menge des Teilstromes so gewählt wird, daß die in ihm enthaltenen Verunreinigungen der Menge entsprechen, die mit dem Filtrat eingebracht wird. Das Filtrat wird bis etwa zur maximal möglichen Natriumkonzentration eingedampft. Diese liegt im Temperaturbereich von etwa 30 bis 40°C. Die Karbonat-Kristallisation erfolgt vorzugsweise durch Abkühlen unter 20°C. Das Abtrennen des Kristallisats von der Mutterlauge kann durch Zentrifugieren unter gleichzeitigem Waschen des Kristallisats mit Wasser erfolgen. Der Trocknung des Kristallisats kann eine Kalzination folgen. Die Rückführung des Waschwassers in die Eindampfung hat den Vorteil, daß der mit ihm ausgeschleuste Natriumgehalt zurückgewonnen wird und keine Abwässer anfallen. Durch die Reinigung des restlichen Teilstroms wird eine Anreicherung der Verunreinigungen, insbesondere Schwefelverbindungen, im Kreislauf über die maximal zulässigen Werte vermieden. Je nach Anforderung an den Reinheitsgrad des zu gewinnenden Natriumkarbonats muß der maximal zulässige Wert für Schwefelverunreinigungen in der Mutterlauge eingestellt werden.

Eine vorzugsweise Ausgestaltung besteht darin, daß zur Befreiung des restlichen Teilstromes von Verunreinigungen eine auf den Gehalt an Sulfat, Sulfit und Karbonat berechnete Menge an Kalk zugegeben wird, der ausgefällte Rückstand abgetrennt und gewaschen wird, das Filtrat und Waschfiltrat bis zur Sättigungsgrenze eingedampft werden, durch Kristallisation $Na_2S_2O_3 \cdot 5 H_2O$ auskristallisiert wird, das Kristallisat von der Mutterlauge abgetrennt und gewaschen wird, und die Mutterlauge und das Waschfiltrat in die Eindampfung des Filtrates gemäß (f) oder in die Karbonat-Kristallisation zurückgeleitet werden. $CaCO_3$, $CaSO_4$ sowie $CaSO_3$ werden unter Bildung von NaOH ausgefällt, das als $Na_2CO_3$ wiedergewonnen wird. Der ausgefällte und gewaschene Rückstand wird deponiert. Die Kristallisation erfolgt vorzugsweise durch Kühlung. Das $Na_2S_2O_3 \cdot 5 H_2O$ stellt ein Verkaufsprodukt dar. Auf diese Weise ist eine Reinigung des restlichen Teilstromes in einfacher Weise möglich, wobei nur ein Abfallprodukt anfällt, das gut deponierbar ist.

Eine vorzugsweise Ausgestaltung besteht darin, daß zur Befreiung des restlichen Teilstromes von Verunreinigungen eine zur Oxidation des $Na_2S_2O_3$-Gehaltes ausreichende Menge $H_2O_2$ zugegeben wird und das dabei gebildete $Na_2SO_4$ zusammen mit dem mit dem Teilstrom eingebrachten Sulfat, Sulfit und Karbonat durch Zugabe einer ausreichenden Menge an Kalk ausgefällt wird, der ausgefällte Rückstand abgetrennt und gewaschen wird, und das Filtrat und Waschfiltrat in die Eindampfung des Filtrates gemäß (f) oder in die Karbonat-Kristallisation zurückgeleitet werden. Auch auf diese Weise ist eine einfache Reinigung des restlichen Teilstromes möglich, wobei nur ein Abfallprodukt entsteht, das gut deponierbar ist.

Eine vorzugsweise Ausgestaltung besteht darin, daß das Verhältnis von $Na_2CO_3$ zu $NaHCO_3$ in der Laugung über den pH-Wert so eingestellt wird, daß das in die Eindampfung des Filtrates gemäß (f) oder in die Karbonat-Kristallisation aus der Reinigung des restlichen Teilstromes zurückgeführte NaOH mit dem $NaHCO_3$ im Filtrat gemäß (f) stöchiometrisch zu $Na_2CO_3$ reagiert. Dadurch kann das Natrium in einer einzigen Verbindung gewonnen werden.

Eine Ausgestaltung besteht darin, daß vor der Kristallisation des Natriumkarbonats NaOH zur Umsetzung von $NaHCO_3$ zu $Na_2CO_3$ zugesetzt wird. Die NaOH-Zugabe kann vor oder nach der Eindampfung erfolgen. Auch dadurch kann das Natrium in einer einzigen Verbindung gewonnen werden.

Eine Ausgestaltung besteht darin, daß nach der Eindampfung des Filtrates gemäß (f) bis zur Sättigungsgrenze $CO_2$ zur $NaHCO_3$-Bildung eingeleitet wird und das Kristallisat durch thermische Behandlung in $Na_2CO_3$ überführt wird. Bei dieser Arbeitsweise wird die Wassermenge verringert, die bei der Trocknung des Kristallisats ausgetrieben werden muß, jedoch muß eine höhere Temperatur zur Bildung von $Na_2CO_3$ angewendet werden.

Eine vorzugsweise Ausgestaltung besteht darin, daß das Waschen des Rückstandes gemäß (e) mit den Kondensaten aus den Eindampfungen erfolgt. Sowohl das Kondensat aus der Eindampfung des Filtrates gemäß (f) als auch das Kondensat aus der Eindampfung des Filtrates bei der Reinigung des restlichen Teilstromes werden auf diese Weise wieder in den Kreislauf geführt und es fällt kein Abwasser an.

Eine vorzugsweise Ausgestaltung besteht darin, daß das Abgas aus den Laugungsstufen und das Abgas aus der Eindampfung des Filtrates gemäß (f) aufbereitet wird. Dadurch wird das ausgetriebene

$H_2S$ vor der Abgabe in die Atmosphäre entfernt.

Die Erfindung wird anhand eines Ausführungsbeispiels näher erläutert.

Ausführungsbeispiel

**1. Laugungsstufe**

| Einsatz | 1000 kg Schlacke |
| | 32% Na |
| | 8% S |
| | 37% $SiO_2$ |
| | 572 $Nm^3$ Rauchgas |
| | 30 Vol.-% $CO_2$ |
| | 3648 kg Waschfiltrat |
| | 114,40 kg Na |
| | 0,94 kg $SiO_2$ |
| | 0,66 kg $SO_4$-Schwefel |
| | 1,97 kg $S_2O_3$-Schwefel |
| | 10,52 kg S-Schwefel |
| Temperatur | 65°C |
| pH-Wert | 9,8 |
| Verweilzeit | 1 Stunde |
| $SiO_2$ in gelöster Form | 38 g/l |

**2. Laugungsstufe**

| Einsatz | Suspension aus |
| | 1. Laugungsstufe |
| | 312 $Nm^3$ Rauchgas |
| | 30 Vol.-% $CO_2$ |
| Temperatur | 65°C |
| pH-Wert | 9,5 |
| Verweilzeit | 1 Stunde |
| $SiO_2$ in gelöster Form | 2,3 g/l |

**3. Laugungsstufe**

| Einsatz | Suspension aus |
| | 2. Laugungsstufe |
| | 156 $Nm^3$ Rauchgas |
| | 30 Vol.-% $CO_2$ |
| Temperatur | 65°C |
| pH-Wert | 9,1 |
| Verweilzeit | 1 Stunde |
| $SiO_2$ in gelöster Form | 0,9 g/l |

**Abgas aus 1. bis 3. Laugungsstufe**

| | 949,63 $Nm^3$ |
| | 164,95 $Nm^3$ $CO_2$ |
| | 16,8 $Nm^3$ $H_2S$ |
| | 39,88 $Nm^3$ $H_2O$ |

**Filtration**

| Einsatz | 4878,45 kg Suspension aus der 3. Laugungsstufe |
|---|---|
| Filtrat | 3037,09 kg |
| | 278,40 kg Na |
| | 2,28 $SiO_2$ |
| | 1,60 kg $SO_4$-Schwefel |
| | 4,80 kg $S_2O_3$-Schwefel |
| | 25,60 kg S-Schwefel |

**Waschen des Rückstandes**

| Waschen in 4 Stufen im Gegenstrom mit 1778,65 kg Kondensat und 1221,35 kg Wasser | |
|---|---|
| Rückstand | 1193,36 kg feucht |
| | 594,3 kg trocken |
| | 7,0% Na (tr.) |
| | 3,5% S (tr.) |
| | 61,9% $SiO_2$ (tr.) |
| Waschfiltrat | 3648 kg |
| | 114,4 kg Na |
| | 0,94 kg $SiO_2$ |
| | 0,66 kg $SO_4$-Schwefel |
| | 1,97 kg $S_2O_3$-Schwefel |
| | 10,52 kg S-Schwefel |

<u>Eindampfen des Filtrates zusammen mit der rückgeführten Mutterlauge aus den Kristallisationsschritten von Na-Karbonat und Na-Thiosulfat:</u>

Das Eindampfen erfolgte zunächst bei Normaldruck und im weiteren Verlauf unter Vakuum, wobei die Temperatur auf ca. 35°C abgesenkt wurde. Die eingedampfte Lösung enthielt 196 g/l Na.

| Eingedampfte Lösung | 3993,11 kg |
|---|---|
| | 565,5 kg Na |
| | 2,28 kg $SiO_2$ |
| | 31,65 kg $SO_4$-Schwefel |
| | 187,73 kg $S_2O_3$-Schwefel |
| Kondensat | 1690,91 kg |
| Abgas | 27,20 kg $H_2S$ |

<u>Kristallisation:</u>

Abkühlung der eingedampften Lösung auf 15°C.

**Zentrifugieren und Waschen**

Das Zentrifugieren erfolgte unter Zusatz von 492,57 kg Wasser.

| Kristallisat | 1748,83 kg mit 5% Feuchte |
| | 276,1 kg Na |
| | 2,28 kg $SiO_2$ |
| | 0,53 kg $SO_4$-Schwefel |
| | 1,60 kg $S_2O_3$-Schwefel |
| Mutterlauge und Waschfiltrat | 2736,85 kg |
| | 289,40 kg Na |
| | 31,12 kg $SO_4$-Schwefel |
| | 186,13 kg $S_2O_3$-Schwefel |

**Rückführung Mutterlauge in Eindampfung**

| Mutterlauge | 2642,70 kg |
| | 279,44 kg Na |
| | 30,05 kg $SO_4$-Schwefel |
| | 179,70 kg $S_2O_3$-Schwefel |

**Reinigung des restlichen Teilstromes der Mutterlauge**

Fällung von $SO_4$-Schwefel und $CO_3$ durch Kalk

| Mutterlauge | 94,15 kg |
| $Ca(OH_2)$ | 8,62 kg |

**Filtration und Waschen**

Die Filtration erfolgte unter gleichzeitigem Waschen mit 60 kg Wasser.

| Filterrückstand | 33,15 kg |
| | 7,62 kg $CaCO_3$ |
| | 1,09 kg $Ca(HCO_3)_2$ |
| | 4,55 kg $CaSO_4$ |
| | 19,89 kg Feuchte |
| Waschfiltrat | 129,62 kg |
| | 9,96 kg Na |
| | 6,40 kg $S_2O_3$-Schwefel |

**Eindampfen des Waschfiltrates**

Die Eindampfung erfolgte auf einen Gehalt an Salzen von 60%.

| eingedampftes Waschfiltrat | 41,88 kg |
| Kondensat | 87,74 kg |

**Kristallisation:**

Abkühlung auf 15°C

| Zentrifugieren und Waschen | |
|---|---|
| Das Zentrifugieren erfolgte unter Zusatz von 2,6 kg Wasser. | |
| Kristallisat | 13,05 kg |
| | 2,30 kg Na |
| | 0,65 kg Feuchte |
| Mutterlauge und Waschfiltrat | 31,43 kg |
| | 7,66 kg Na |
| | 9,32 kg NaOH |
| | 3,20 kg $S_2O_3$-Schwefel |

Mutterlauge + Waschfiltrat wurden in die erste Eindampfung zurückgeführt.

Die Vorteile der Erfindung bestehen darin, daß ein sehr gutes Natriumausbringen von über 80 % erreicht wird und gleichzeitig der Gehalt an wasserlöslichem Natrium im Rückstand so stark verringert wird, daß eine problemlose Deponie möglich ist. Die erzeugte Soda ist sehr rein. Das Verfahren arbeitet abwasserfrei und erzeugt nur gut deponierbare Rückstände.

## Patentansprüche

1. Verfahren zur Aufarbeitung von beim Entschwefeln von Roheisenschmelzen mit Natriumkarbonat anfallenden Schlacken, wobei
a) die zerkleinerte Schlacke mit Waschflüssigkeit in einer ersten Laugungsstufe bei einer Temperatur von 55 bis 75°C und einem pH-Wert von 9,5 bis 12 unter Rühren gelaugt wird, wobei der pH-Wert so hoch eingestellt wird, daß mindestens ein Teil des $SiO_2$-Gehaltes der Schlacke aufgelöst wird,
b) die Suspension aus der ersten Laugungsstufe in einer zweiten Laugungsstufe bei einer Temperatur von 55 bis 70°C unter Rühren und $CO_2$-Einleitung auf einen niedrigeren pH-Wert als in (a) von 9 bis 10 eingestellt wird, und die Verweilzeit in der Laugungsstufe so eingestellt wird, daß das $SiO_2$ weitgehend ausfällt,
c) das Verhältnis von Waschflüssigkeit und Schlacke in (a) und (b) so eingestellt wird, daß eine Na-Konzentration von mindestens 100 g/l in der Laugeflüssigkeit erreicht wird, jedoch die Sättigungskonzentration nicht erreicht wird,
d) die Suspension aus (b) durch Filtrieren in Rückstand und Filtrat getrennt wird,
e) der Rückstand aus (d) mit Wasser gewaschen wird, wobei die Wassermenge so eingestellt wird, daß das Waschfiltrat maximal der in (a) erforderlichen Laugeflüssigkeit entspricht, und
f) aus dem Filtrat aus (d) Natriumkarbonat rückgewonnen wird.

2. Verfahren nach Anspruch 1, dadurch gekennzeichnet, daß zur Einstellung des pH-Wertes in der ersten Laugungsstufe (a) $CO_2$ eingeleitet wird.

3. Verfahren nach Anspruch 1 oder 2, dadurch gekennzeichnet, daß die zweite Laugungsstufe (c) zweistufig hintereinandergeschaltet durchgeführt wird.

4. Verfahren nach einem der Ansprüche 1 bis 3, dadurch gekennzeichnet, daß das Waschen des Rückstandes gemäß (e) mehrstufig durchgeführt wird.

5. Verfahren nach einem der Ansprüche 1 bis 4, dadurch gekennzeichnet, daß zur Rückgewinnung des Natriumkarbonats aus dem Filtrat gemäß (f) das Filtrat bis zur Sättigungsgrenze eingedampft wird, eine Karbonat-Kristallisation durchgeführt wird, das Kristallisat aus der Mutterlauge abgetrennt, gewaschen und getrocknet wird, die überwiegende Menge der Mutterlauge und des Waschwassers in die Eindampfung zurückgeleitet wird, der restliche Teilstrom von Verunreinigungen befreit und dann in die Eindampfung oder Kristallisation zurückgeleitet wird, wobei die Menge des Teilstromes so gewählt wird, daß die in ihm enthaltenen Verunreinigungen der Menge entsprechen, die mit dem Filtrat eingebracht wird.

6. Verfahren nach Anspruch 5, dadurch gekennzeichnet, daß zur Befreiung des restlichen Teilstromes von Verunreinigungen eine auf den Gehalt an Sulfat, Sulfit und Karbonat berechnete Menge an Kalk zugegeben wird, der ausgefällte Rückstand abgetrennt und gewaschen wird, das Filtrat und Waschfiltrat bis zur Sättigungsgrenze eingedampft werden, durch Kristallisation $Na_2S_2O_3$ . 5 $H_2O$ auskristallisiert wird, das Kristallisat von der Mutterlauge abgetrennt und gewaschen wird, und die Mutterlauge und das Waschfiltrat in die Eindampfung des Filtrates gemäß (f) oder in die Karbonat-Kristallisation zurückgeleitet werden.

7. Verfahren nach Anspruch 5, dadurch gekennzeichnet, daß zur Befreiung des restlichen Teilstromes von Verunreinigungen eine zur Oxidation des $Na_2S_2O_3$-Gehaltes ausreichende Menge $H_2O_2$ zugegeben wird und das dabei gebildete $Na_2SO_4$ zusammen mit dem mit dem Teilstrom eingebrachten Sulfat, Sulfit und Karbonat durch Zugabe einer ausreichenden Menge an Kalk ausgefällt wird, der ausgefällte Rückstand abgetrennt und gewaschen wird, und das Filtrat und Waschfiltrat in die Eindampfung des Filtrates gemäß (f) oder in die Karbonat-Kristallisation zurückgeleitet werden.

8. Verfahren nach Anspruch 6 oder 7, dadurch gekennzeichnet, daß das Verhältnis von $Na_2CO_3$ zu $NaHCO_3$ in der Laugung über den pH-Wert so eingestellt wird, daß das in die Eindampfung des Filtrats gemäß (f) oder in die Karbonat-Kristallisation aus der Reinigung des restlichen Teilstromes zurückgeführte NaOH mit dem $NaHCO_3$ im Filtrat gemäß (f) stöchiometrisch zu $Na_2CO_3$ reagiert.

9. Verfahren nach einem der Ansprüche 5 bis 8, dadurch gekennzeichnet, daß vor der Kristallisation des Natriumkarbonats NaOH zur Umsetzung von $NaHCO_3$ zu $Na_2CO_3$ zugesetzt wird.

10. Verfahren nach einem der Ansprüche 5 bis 7, dadurch gekennzeichnet, daß nach der Eindampfung des Filtrates gemäß (f) bis zur Sättigungsgrenze $CO_2$ zur $NaHCO_3$-Bildung eingeleitet wird und das Kristallisat durch thermische Behandlung in $Na_2CO_3$ überführt wird.

11. Verfahren nach einem der Ansprüche 5 bis 10, dadurch gekennzeichnet, daß das Waschen des Rückstandes gemäß (e) mit den Kondensaten aus den Eindampfungen erfolgt.

12. Verfahren nach einem der Ansprüche 1 bis 10, dadurch gekennzeichnet, daß das Abgas aus den Laugungsstufen und das Abgas aus der Eindampfung des Filtrates gemäß (f) aufbereitet wird.

13. Verfahren nach einem der Ansprüche 1 bis 12, dadurch gekennzeichnet, daß der pH-Wert in der ersten Laugungsstufe (a) auf 9,5 bis 10,5 und in der zweiten Laugungsstufe (b) auf 9 bis 9,5 eingestellt wird.

14. Verfahren nach einem der Ansprüche 1 bis 13, dadurch gekennzeichnet, daß die Temperatur in bieden Laugungsstufen (a), (b) auf 60 bis 70°C gehalten wird.

## Claims

1. A method of processing slags produced by the desulphurization of molten crude iron with sodium carbonate, wherein

a) the disintegrated slag is leached with stirring with a washing liquor in a first leaching stage at a temperature from 55 to 75°C and a pH value from 9.5 to 12, which pH value is so adjusted that at least part of the $SiO_2$ content of the slag is dissolved,

b) the suspension from the first leaching stage is adjusted with stirring at a temperature from 55 to 70° and with introduction of $CO_2$ to a pH value from 9 to 10, which is lower than that in (a), and the residence time in the leaching stage is so adjusted that the $SiO_2$ is substantially precipitated,

c) the ratio of washing liquor and slag in (a) and (b) is so adjusted that an Na concentration of at least 100 g/l in the leaching liquor is obtained but the saturation concentration is not reached.

d) the suspension from (b) is separated by filtration into residue and filtrate,

e) the residue from (d) is washed with water and the amount of water is so adjusted that the filtrate obtained after washing corresponds at most to the leaching liquor which is required in (a), and

f) sodium carbonate is recovered from the filtrate from (d).

2. A method according to claim 1, characterized in that $CO_2$ is introduced to adjust the pH value in the first leaching stage.

3. A method according to claim 1 or 2, characterized in that the second leaching stage (c) is carried out in two stages, which are connected one behind the other.

4. A method according to any of claims 1 to 3, characterized in that the washing of the residue in (e) is carried out in a plurality of stages.

5. A method according to any of claims 1 to 4, characterized in that for the recovery of the sodium carbonate from the filtrate in (f) the filtrate is evaporated to its saturation limit, carbonate is crystallized, the crystallizate is separated from the mother liquor and is washed and dried, a major amount of the mother liquor and of the washing water are recycled to the evaporation, the impurities are removed from the remaining partial stream, which is then recycled to the evaporation or crystallization, and the rate of the partial stream is so selected that the impurities contained therein correspond to the amount which is introduced with the filtrate.

6. A method according to claim 5, characterized in that the impurities are removed from the remaining partial stream in that lime is added in an amount which has been calculated in dependence on the contents of sulphate, sulphite and carbonate, the precipitated residue is separated and washed, the filtrate and the filtrate obtained after washing are evaporated to the saturation limit, $Na_2S_2O_3 \cdot 5\,H_2O$ is crystallized out by crystallization, the crystallizate is separated from the mother liquor and is washed and the mother liquor and the filtrate obtained after washing are recycled to the evaporation of the filtrate in (f) or to the crystallization of carbonate.

7. A method according to claim 5, characterized in that the impurities are removed from the remaining partial stream in that $H_2O_2$ is added in an amount which is sufficient to oxidize the $Na_2S_2O_3$ content, the resulting $Na_2SO_4$ together with the sulphate, sulphite and carbonate introduced with the partial stream is precipitated by an addition of a sufficient amount of lime, the precipitated residue is separated and washed and the filtrate and the filtrate obtained after washing are recycled to the evaporation of the filtrate in (f) or to the crystallization of carbonate.

8. A method according to claim 6 or 7, characterized in that the ratio of $Na_2CO_3$ to $NaHCO_3$ during the leaching is so adjusted by a control of the pH value that the NaOH which is recycled from the purification of the remaining partial stream to the evaporation of the filtrate in (f) or to the crystallization of carbonate stoichiometrically reacts with the $NaHCO_3$ in the filtrate obtained in (f) to form $Na_2CO_3$.

9. A method according to any of claims 5 to 8, characterized in that NaOH for reacting with $NaHCO_3$ to form $Na_2CO_3$ is added before the crystallization of sodium carbonate.

10. A method according to any of claims 5 to 7, characterized in that the evaporation of the filtrate to its saturation limit in (f) is succeeded by an introduction of $CO_2$ so that $NaHCO_3$ is formed and the crystallizate is converted to $Na_2CO_3$ by a thermal treatment.

11. A method according to any of claims 5 to 10, characterized in that the residue is washed in (e) with the condensates from the evaporations.

12. A method according to any of claims 1 to 10, characterized in that the exhaust gas from the leaching stations and the exhaust gas from the evaporation of the filtrate is processed in accordance with (f).

13. A method according to any of claims 1 to 12, characterized in that the pH value is adjusted to 9.5 to 10.5 in the first leaching stage (a) and to 9 to 9.5 in the second leaching stage (b).

14. A method according to any of claims 1 to 13, characterized in that the temperature is maintained at 60 to 70°C in both leaching stages (a), (b).

## Revendications

1. Procédé de traitement des laitiers se formant lors de la désulfuration de fontes fondues par du carbonate de sodium, qui consiste:

a) à lixivier sous agitation les laitiers fragmentés par un liquide de lavage, dans un premier stade de lixiviation à une température de 55 à 75°C et à un pH de 9,5 à 12, en réglant le pH à une valeur si élevée qu'au moins une partie de la teneur en $SiO_2$ du laitier est dissoute;

b) à régler à une valeur plus basse que dans a) de 9 à 10 le pH de la suspension provenant du premier stade de lixiviation dans un second stade de lixiviation s'effectuant à une température de 55 à 70°C, sous agitation et avec introduction de $CO_2$, et à régler la durée de séjour dans le stade de lixiviation, de manière à précipiter, dans une grande mesure, le $SiO_2$,

c) à régler le rapport de liquide de lavage et du laitier, dans a) et b), de manière à obtenir une concentration en Na d'au moins 100 g/l dans le liquide de lixiviation, mais à ne pas atteindre cependant la concentration de saturation,

d) à séparer la suspension provenant de b) par filtration, en un résidu et en un filtrat,

e) à laver le résidu provenant de d) par de l'eau, en réglant la quantité d'eau de façon que le filtrat de lavage corresponde au maximum au liquide de lixiviation nécessaire dans a), et

f) à récupérer le carbonate de sodium du filtrat provenant de d).

2. Procédé suivant la revendication 1, caractérisé en ce qu'il consiste à introduire du $CO_2$ dans le premier stade de lixiviation a) pour régler le pH.

3. Procédé suivant la revendication 1 ou 2, caractérisé en ce qu'il consiste à effectuer le second stade de lixiviation c) en deux stades en série.

4. Procédé suivant l'une des revendications 1 à 3, caractérisé en ce qu'il consiste à effectuer le lavage du résidu, suivant e), en plusieurs stades.

5. Procédé suivant l'une des revendications 1 à 4, caractérisé en ce qu'il consiste, pour récupérer le carbonate de sodium du filtrat suivant f), à évaporer le filtrat jusqu'à la limite de saturation, à effectuer une cristallisation du carbonate, à séparer le produit cristallisé de la liqueur-mère, à le laver et à le sécher, à retourner la quantité prépondérante de liqueur-mère et d'eau de lavage à l'évaporation, à débarrasser le courant partiel restant des impuretés et à le renvoyer à l'évaporation ou la cristallisation, en choisissant la quantité du courant partiel de façon que les impuretés qui y sont contenues correspondent à la quantité qui est introduite par le filtrat.

6. Procédé suivant la revendication 5, caractérisé en ce qu'il consiste, pour débarrasser le courant partiel restant des impuretés, à ajouter une quantité de chaux calculée sur la teneur en sulfate, en sulfite et en carbonate, à séparer et à laver le résidu précipité, à évaporer le filtrat et le filtrat de lavage jusqu'à la limite de saturation, à séparer $Na_2S_2O_3 \cdot 5H_2O$ par cristallisation, à séparer le produit cristallisé de la liqueur-mère et à le laver et à retourner la liqueur-mère et le filtrat de lavage à l'évaporation du filtrat suivant f), ou à la cristallisation du carbonate.

7. Procédé suivant la revendication 5, caractérisé en ce qu'il consiste, pour débarrasser le courant partiel restant des impuretés, à ajouter une quantité de $H_2O_2$ suffisante pour l'oxydation de la teneur en $Na_2S_2O_3$, et à précipiter le $Na_2SO_4$ ainsi formé en même temps que le sulfate, le sulfite et le carbonate introduit par le courant partiel par addition d'une quantité suffisante de chaux, à séparer et à laver le résidu précipité et à retourner le filtrat et le filtrat de lavage à l'évaporation du filtrat suivant f), ou à la cristallisation du carbonate.

8. Procédé suivant la revendication 6 ou 7, caractérisé en ce qu'il consiste à régler le rapport de $Na_2CO_3$ à $NaHCO_3$ dans la lixiviation, par le pH, de façon que la NaOH renvoyée à l'évaporation du filtrat, suivant f) ou à la cristallisation du carbonate, à partir de l'épuration du courant partiel restant, réagisse stoechiométriquement sur le $NaHCO_3$ du filtrat suivant f), pour donner du $Na_2CO_3$.

9. Procédé suivant l'une des revendications 5 à 8, caractérisé en ce qu'il consiste à ajouter, avant la cristallisation du carbonate de sodium, de la NaOH pour transformer $NaHCO_3$ en $Na_2CO_3$.

10. Procédé suivant l'une des revendications 5 à 7, caractérisé en ce qu'il consiste à introduire, après l'évaporation du filtrat, suivant f), jusqu'à la limite de saturation, du $CO_2$ pour former du $NaHCO_3$ et à

transformer le produit cristallisé en $Na_2CO_3$ par traitement thermique.

11. Procédé suivant l'une des revendications 5 à 10, caractérisé en ce qu'il consiste à effectuer le lavage du résidu, suivant e), par les produits condensés provenant de l'évaporation.

12. Procédé suivant l'une des revendications 1 à 10, caractérisé en ce qu'il consiste à traiter l'effluent gazeux des stades de lixiviation et l'effluent gazeux de l'évaporation du filtrat suivant f).

13. Procédé suivant l'une des revendications 1 à 12, caractérisé en ce qu'il consiste à régler le pH au premier stade de lixiviation a) entre 9,5 et 10,5 et, au second stade de lixiviation d), entre 9 et 9,5.

14. Procédé suivant l'une des revendications 1 à 13, caractérisé en ce qu'il consiste à maintenir la température, dans les deux stades de lixiviation a) et b), entre 60 et 70°C.